(19) Europäisches Patentamt
European Patent Office
Office européen des brevets

(11) **EP 3 863 426 B1**

(12) **EUROPEAN PATENT SPECIFICATION**

(45) Date of publication and mention of the grant of the patent:
**07.12.2022 Bulletin 2022/49**

(21) Application number: **18807734.1**

(22) Date of filing: **10.10.2018**

(51) International Patent Classification (IPC):
***A23L 3/015*** *(2006.01)*

(52) Cooperative Patent Classification (CPC):
**A23L 3/0155**

(86) International application number:
**PCT/PL2018/000096**

(87) International publication number:
**WO 2020/076166 (16.04.2020 Gazette 2020/16)**

(54) **HIGH PRESSURE ISOSTATIC PRESSING ASSEMBLY, IN PARTICULAR FOOD HIGH PRESSURE PROCESSING ASSEMBLY**

ISOSTATISCHE HOCHDRUCKPRESSANORDNUNG, INSBESONDERE HOCHDRUCK-NAHRUNGSMITTELVERARBEITUNGSANORDNUNG

ENSEMBLE DE PRESSAGE ISOSTATIQUE À HAUTE PRESSION, EN PARTICULIER ENSEMBLE DE TRAITEMENT À HAUTE PRESSION D'ALIMENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.08.2021 Bulletin 2021/33**

(73) Proprietor: **EXDIN SOLUTIONS SPOLKA Z OGRANICZONA ODPOWIEDZIALNOSCIA**
**31-983 Krakow (PL)**

(72) Inventors:
 • **WID AK, Grzegorz**
  **31-866 Kraków (PL)**

 • **WACHOWICZ, ukasz**
  **31-444 Kraków (PL)**
 • **BRZEGOWY, Rafa**
  **34-482 Lipnica Ma a (PL)**
 • **KORYL, Grzegorz**
  **35-606 Rzeszów (PL)**

(74) Representative: **Lukaszyk, Szymon**
**Kancelaria Patentowa Lukaszyk**
**ul. Glowackiego 8/6**
**40-052 Katowice (PL)**

(56) References cited:
**EP-A2- 1 707 346   US-A- 4 111 327**
**US-A- 5 585 076   US-A- 5 622 678**

## Description

The invention relates to a high pressure isostatic pressing assembly, in particular food high pressure processing assembly, comprising at least one high pressure, longitudinal vessel having an internal chamber closed at both axial ends with two head assemblies, each comprising a body adjoining the vessel, wherein at least one of the head assemblies further comprises a blocking chamber located within the body transversely relative to the longitudinal axis of the vessel, a loading outlet, substantially aligned with the axis of the vessel, joining an axially external side of the body with said blocking chamber, and having cross-sectional area substantially corresponding to the cross-sectional area of the vessel, and a plug disposed displaceably within the blocking chamber and provided with a sealing means apt to enter and sealingly close the internal chamber of the vessel during the pressure applying phase of the vessel.

Background of the Invention

High pressure cylindrical vessels are successfully utilized in different high pressure applications. In particular they are used in food High Pressure Processing (HPP) systems, in which food products are subjected to very high pressures, in the range of 200 to 1 000 MPa.

Patent publication US 5,585,076 discloses an installation for subjecting substances packaged in flexible packets to high pressure treatment including a cylindrical vessel provided with a head assembly at each end. Each head assembly includes a moving assembly that can be displaced perpendicularly to the axis of the enclosure. The moving assembly includes a stopper type plug provided with a seal, a spacer provided with a pull rod a drawer and a plugging body. The moving assembly is slidably mounted in a force take-up member. Via cooperation between sloping ramps carried by the plug and complementary sloping grooves in the drawer, the transverse displacement of the drawer causes axial displacements of the plug. The spacer in the form of a fork with two prongs flanking the stem of the plug is mounted to slide in the drawer and is situated between the plug and the plugging body.

Axial forces induced by the pressure inside the vessel are in this installation transferred by the head assemblies in a tensile manner to the vessel which reduces durability of the vessel, while cyclic loads are applied. Both local stress concentrations and global stress pattern are thus unfavourable in this installation.

Patent publication EP1707346A2 discloses an isostatic press with a split pressure container. The press has a pressure container with pressure container segments and a closing cover. Counter pressure surfaces are arranged at first and last pressure container segments. The surfaces are pressurized with the pressure from a pressure space, whose resulting axial forces acts against axial pressure forces in a joint between the segments, where the axial pressure forces develops between a sealant and a usable pressure space.

Patent publication US 4,111,327 discloses a pressure vessel. The cylindrical body of the pressure vessel for use as a reaction vessel, is built up from courses of flat circularly arcuate segmental plates, the courses being located with respect to each other by locating means passing through aligning openings in the plates. To facilitate construction the openings in each plate are disposed in a symmetrical pattern or array. The locating means may be pins or preferably sleeves, and prestressing means for holding the courses together may be provided by tie-rods or cables passing through such sleeves and also possibly through openings not taken up by locating means. The floor and/or cover of the pressure vessel may be double-walled, and prestressing means provided within the double walls for tightly securing the floor and/or cover to the inside of the cylindrical wall.

Patent publication US 5,622,678 discloses a high-pressure generating apparatus including a high-pressure chamber, a low-pressure chamber located beneath the high-pressure chamber and having a diameter substantially larger than the diameter of the high-pressure chamber, a tandem piston having first and second portions displaceable in the high-pressure and low-pressure chambers, respectively, for building-up pressure therein, and a yoke embracing the high-pressure and low-pressure chambers for applying a pressure force to the high-pressure chamber cover and the low-pressure chamber bottom upon built-up of pressure in the high pressure and low-pressure chambers.

It has been an object of the present invention to provide a high pressure isostatic pressing assembly, in particular food high pressure processing assembly which would minimize the amplitude of cyclic stresses applied to the load carrying members of the assembly that transfer axial loads and thus increase its fatigue life. Yet another object of the present invention has been to provide a durable, simple and cost-efficient high pressure assembly enabling fast and simple loading and unloading operations.

Summary of the Invention

The term "loading phase" as used in the context of this specification refers both to loading the vessel with products to be processed, as well as unloading it with products after high pressure processing; the term "pressure applying phase" refers to applying a pressure inside the vessel sealingly closed by the plugs using a liquid (usually water); while the term "closing phase" refers both to closing the vessel with plugs entering its internal chamber before pressure applying phase, as well as opening it after this phase.

Terms "axial", "radial", "annular" refer to a polar coordinate system describing the locations of the assembly components with respect to the longitudinal axis of the vessel.

The invention provides a high pressure isostatic pressing assembly, as recited in the preamble, which is characterized in that it further comprises at least two longitudinal tie-rods juxtaposed, preferably symmetrically, around the external surface of the vessel at the radially external side of the blocking chamber, wherein each end of each tie rod passes through a tie member, coupled with the vessel, and is coupled with a resisting surface transferring axial load on said tie member at the axially external side of said end of said tie rod, wherein said resisting surfaces axially preload said tie-rod, said body and said vessel, and the preload force is adjusted at least to the value ensuring that no separation between said body and said vessel occurs during the loading and closing phase of the vessel, as well as during the pressure applying phase of the vessel so that the vessel is axially compressed in all the range of pressures acting inside the vessel by the head assemblies coupled with the tie-rods.

The rods create a prestressed system of the assembly, so that the vessel is axially compressed in all the range of pressures (i.e. both during the loading and closing phase, as well as during the pressure applying phase) by the head assemblies coupled with the tie-rods. The tie-rods preload level ensures integrity of the assembly construction, so there is no need of mechanical joints (e.g. threads, pins, grooves) that commonly generate stress concentrations. Preloads falling below this level on the other hand might lead to a decoupling of the head assemblies from the vessel which is disadvantageous, as it may cause sudden increase of tensile load in the tie-rods with large amplitude of stress causing accelerated fatigue.

Preferably the bodies of the two head assemblies of the high pressure isostatic pressing assembly are coupled with each other by said at least two longitudinal tie-rods. In this embodiment the vessel I preloaded over its entire length.

in such a case preferably the combined preload force ($T_p$) of all said tie-rods is adjusted at least to the value of the axial force ($F_v$) generated in the vessel during the pressure applying phase multiplied by the axial stiffness ($C_v$) of the vessel relative to the axial stiffness of said tie-rods and the axial stiffness ($C_v$) of the vessel according to the formula

$$T_p \geq F_v \cdot C_v / (C_v + C_t).$$

Preferably said tie member of said longitudinal tie-rod is the body of the head assembly, adjoins or is coupled with the body of the head assembly or the body of the head assembly has a multipart construction and said tie member is the most axially external part of said body transferring axial loads on the vessel.

Preferably the blocking chamber of said at least one head assembly is provided with an axially external face and the plug is provided with an axially external face, wherein said at least one of the head assemblies further comprises a blocking gate having axial width lower than the axial width of the blocking chamber, which is disposed slidably within said blocking chamber and is provided with an axially external face abutting said axially external face of the blocking chamber and an axially internal face, wherein said axially external face of the plug abuts said axially internal face of said blocking gate during the pressure applying phase and is axially displaced from said axially internal face of said blocking gate toward said loading outlet during the loading phase.

Therefore the plug is entirely supported in axial direction by the blocking gate during the pressure applying phase, which enables the transfer of the forces generated by the pressure inside the vessel in to the head assembly and the tie-rods. The plug is also to a large extent displaceable in the blocking chamber and these displacements may be simply defined by system of axial and transverse linear guides and enforced e.g. by at least one, or preferably two hydraulic, pneumatic or mechanical actuator(s). It may be therefore precisely introduced axially into the internal chamber of the vessel, as well as easily moved aside, providing access to the vessel. Finally the blocking assembly including just the plug and the blocking gate disposed, as described, in the blocking chamber is simple and easy in construction and servicing.

In this embodiment preferably said blocking gate is provided with a loading channel having cross-sectional area substantially corresponding to the cross-sectional area of the internal chamber of the vessel, that passes between said axially external face and said axially internal face of said blocking gate substantially in parallel with the axis of the vessel, and during loading phase is substantially aligned with said loading outlet.

Also in these embodiments preferably said plug is supported on said blocking gate.

Preferably at least one of the head assemblies further comprises a plug socket joining the blocking chamber with the internal chamber of the vessel and said plug is disposed displaceably also within said plug socket.

Preferably displacements of the plug within the blocking chamber are determined with respect to the body of the head assembly.

Preferably said plug is provided with a pressure applying channel.

Preferably said resisting surfaces are pressed by at least one nut, which may be preferably screwed on an external thread of said tie rod.

Alternatively or additionally said resisting surfaces are preferably pressed by a multi-bolt tensioning system.

Preferably the high pressure assembly according to the present invention comprises a number of vessels disposed in parallel with each other and closed at their axial ends with two common head assemblies.

Brief description of drawings

The invention shall be described and explained below in exemplary embodiments and in connection with the attached drawings on which:

Fig. 1 is a schematic perspective view of an embodiment of a high pressure assembly for food high pressure processing according to the present invention;
Fig. 2 is a schematic perspective cross-sectional view of the assembly shown in Fig. 1;
Fig. 3 is a schematic perspective view of another embodiment of a high pressure assembly according to the present invention;
Fig. 4 is a schematic cross-sectional view of the closing head assembly of the high pressure assembly during loading phase (Fig. 3a), closing phase (Fig. 3b), and pressure applying phase (Fig. 3c).

Detailed description of preferred embodiment

In the following description numerical references of elements performing the same functions remain the same in the drawings, wherein suffixes (a, b, ...) were added, where appropriate, to additionally distinct elements having different construction.

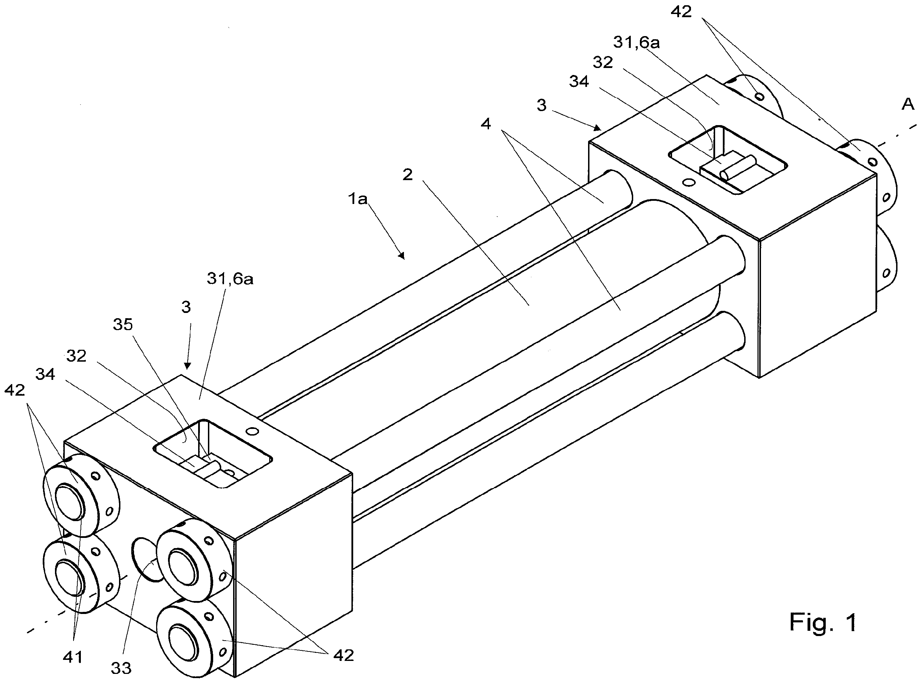

An exemplary embodiment of a high pressure isostatic pressing assembly 1a for food High Pressure Processing is shown in in Fig. 1. The assembly 1a comprises a high pressure, longitudinal, cylindrical vessel 2 provided with an internal chamber 21 of a construction known to those skilled in the art (such as, but not limited to monoblock, wire wound, multilayer, the one disclosed by the inventor of the present application in the international PCT publication WO 2015/133915 A1, etc.) that shall not be described in detail. In the presented embodiment the vessel 2 is shown to be disposed substantially horizontally. In other embodiments however the vessel 2 may be sloped with respect to the horizontal plane or even vertical. Particular positions of the elements of the isostatic pressing assembly are referred with respect to the polar coordinate system defined by the axis A of the vessel 2.

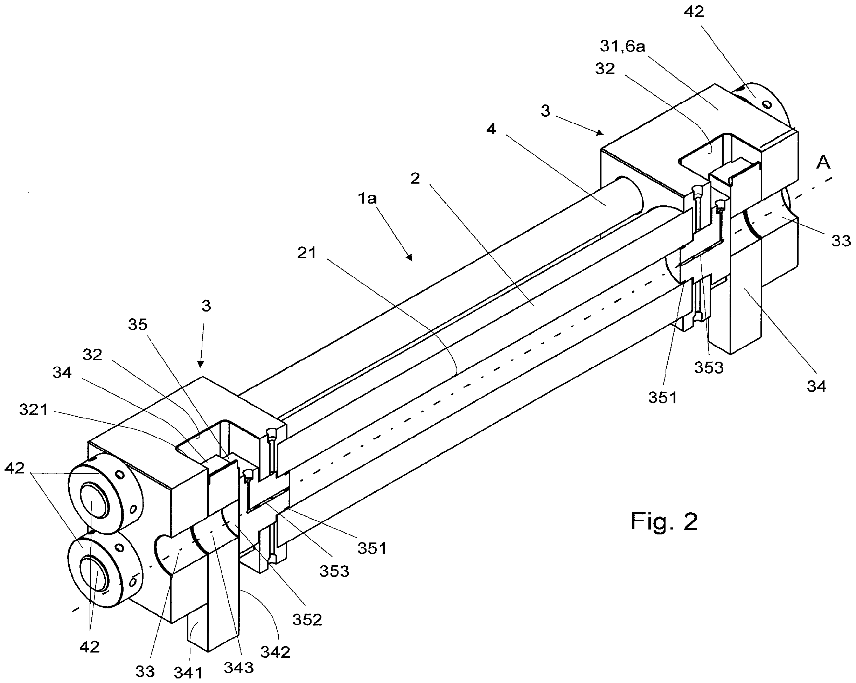

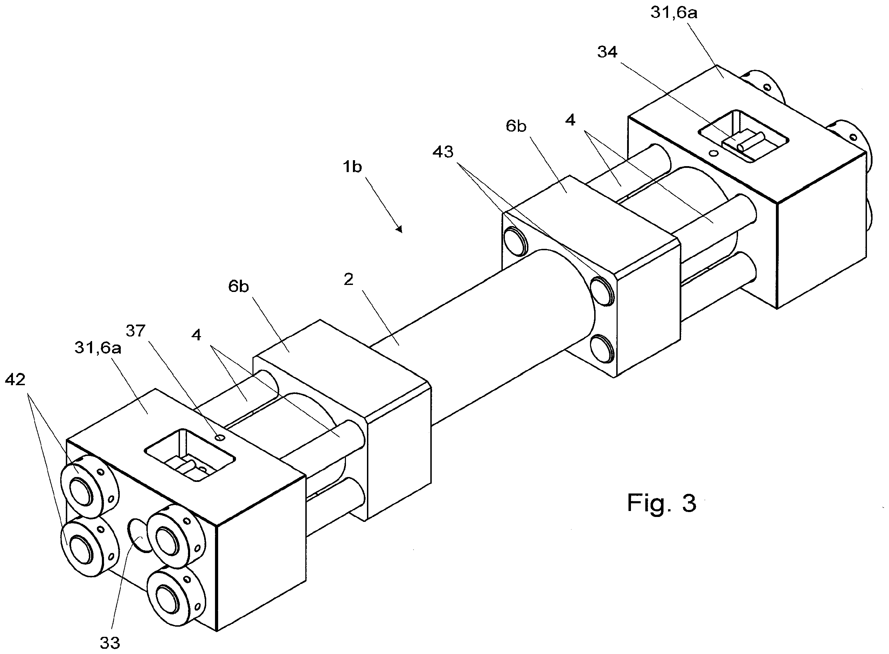

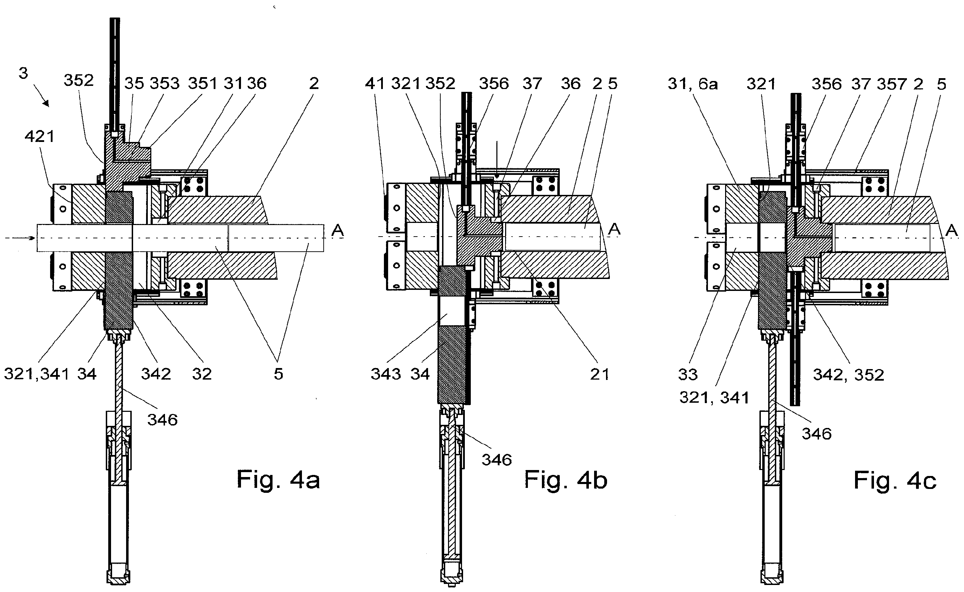

The vessel 2 is closed from both ends by two head assemblies 3. The head assemblies 3 and thus also the vessel 2 are coupled with each other by four longitudinal tie-rods 4 juxtaposed around the external surface of the vessel 2. Each end of each rod 4 passes through a longitudinal opening in a tie member 6a coupled with the vessel 2. In this embodiment the tie member 6a is a solid body 31 of the head assembly 3. In other embodiments it could be an additional flange or plate adjoining the head assembly 3 or otherwise coupled with the vessel 2 (cf. Fig. 3). At the axially external side each end of each tie rod 4 is coupled with a resisting surface 421 (cf. Fig. 4a) transferring axial load between the tie member 31 and the tie-rod 4 at the axially external side of the end of the tie rod 4. The resisting surfaces 421 axially preload the tie-rods 4, the bodies 31 and the vessel 2, and the preload force is adjusted at least to the value ensuring that no separation between the body 31 and the vessel 2 occurs during the pressure applying phase of the vessel 2 (cf. Fig. 2 and Fig. 4c).

In this embodiment the resisting surfaces 421 are defined by the axially internal surfaces of nuts 42 abutting the bodies 31 at their axially external sides. In other embodiments the resisting surfaces may be defined by washers between the nuts 42 and the tie members 6, heads of the tie-rods 4 (cf. Fig. 3), ends of bolts of a multi-bolt tensioning system, or even directly by thread surfaces of the tie-rods 4 screwed inside the tie members 6a or 6b. In this embodiment the axial preload is produced directly by the nuts 42 screwed on the external threads 41 of the tie rods 4. It should be appreciated however that this axial preload may be produced by various techniques and means known to those skilled in the art such as, but not limited to, hydraulic tensioners (e.g. SKF® Hydrocam Bolt Tensioners, Atlas Copco® Tentec CTST tensioners) or mechanical tensioners, including multibolt, tensioners (e.g. Superbolt™ Multi-Jackbolt Tensioners, etc.).

In this embodiment the total preload force $T_p$ of all the tie-rods 4 is adjusted at least to the value of the axial force $F_v$ generated in the vessel 2 during the pressure applying phase multiplied by the stiffness $C_v$ of the vessel 2 relative to the stiffness $C_t$ of the tie-rods 4 and the stiffness of the vessel 2 according to the formula

$$T_p \geq F_v \cdot C_v / (C_v + C_t).$$

Such a value of the preload force $T_p$ reduces the effect of cycling loading on the tie-rods 4 produced by the pressure inside the vessel during pressure applying phase and extends the service life of the load carrying members of the assembly.

Each head assembly 3 is further provided with a plugging assembly enabling packaged products 5 containing the substances that are to be subjected to high pressure treatment to be loaded and unloaded in and out of the vessel 2 (cf. Fig. 4a), and to perform the high pressure treatment by the water that has been fed into the vessel 2 (cf. Fig. 4c).

To this end, as shown in Fig. 2, each head assembly 3 comprises a blocking chamber 32, passing transversely through the body 31 between two pairs of adjacent tie-rods 4, substantially perpendicularly to the axis A of the vessel 2, which is provided with an axially external face 321. A loading outlet 33, substantially aligned with the axis A of the vessel 2, passes longitudinally through the body 31 and has a cross-sectional area substantially corresponding to the cross-sectional area of the internal chamber 21 of the vessel 2. A plug 35 of a stopper type is disposed displaceably within the blocking chamber 32 and is provided with a sealing means 351 apt enter and sealingly close the internal chamber

21 of the vessel 2 during the pressure applying phase.

In this embodiment the head assembly 3 further comprises a plug socket 36 (cf. Fig. 4a, Fig. 4b) joining the blocking chamber 32 with the internal chamber 21 of the vessel 2. The plug 35 is disposed displaceably also within the plug socket 36, while displacements of the plug 35 within the blocking chamber 32 are in this embodiment determined with respect to the body 31 of the head assembly 3.

In this embodiment the head assembly 3 further comprises a blocking gate 34 having axial width lower than the axial width of the blocking chamber 32 which is disposed slidably and substantially perpendicularly to the axis A of the vessel 2, within the blocking chamber 32. The blocking gate 34 is provided with an axially external face 341 abutting the axially external face 321 of the blocking chamber 32, as well as an axially internal face 342. As shown an axially external face 352 of the plug 35 abuts this axially internal face 342 of the blocking gate 34 during the pressure applying phase. During the loading phase (cf. Fig. 4a, 4b) the axially external face 352 of the plug 35 is axially displaced with respect to the axis A from the axially internal face 342 of the blocking gate 34 toward the loading outlet 33, and the plug 35 is supported on the blocking gate 34.

In this embodiment the blocking gate 34 is also provided with a loading channel 343, having cross-sectional area substantially corresponding to the cross-sectional area of the internal chamber 21 of the vessel 2, that passes between the axially external face 341 and the axially internal face 342 of the blocking gate 34 substantially in parallel with the axis A of the vessel 2. During the loading phase the loading channel 343 is substantially aligned with said loading outlet 33 of the head assembly 3.

Fig. 3 illustrates another embodiment of a high pressure isostatic pressing assembly 1b closed from both ends by two head assemblies 3 and comprising axially internal tie members 6b fixed to the vessel 2 by means of thread, groove or clamp connection or interference fit assembly. Each head assembly 3 of the assembly 1b is coupled with the tie member 6b by four longitudinal tie-rods 4 juxtaposed around the external surface of the vessel 2. Axially external ends of each tie-rod 4 pass through longitudinal openings in the bodies 31 of the head assemblies 3. Axially internal ends of each tie-rod 4 are terminated with heads defining axially internal resisting surfaces 43 transferring axial load on the tie members 6b. Similarly as in the embodiment shown in Fig. 1 axially external resisting surfaces 421 are defined by the axially internal surfaces of the nuts 42 abutting the bodies 31 of the head assemblies 3, which axially preload the tie-rods 4, the bodies 31 and the vessel 2, and the preload force is adjusted at least to the value ensuring that no separation between the bodies 31 and the vessel 2 occurs during the pressure applying phase of the vessel 2.

Fig. 4a illustrates the operation of the high pressure assembly during the loading phase. As shown an actuator 346 maintains the position of the blocking gate 34 having its loading channel 343 aligned with the loading outlet 33 of the head assembly 3 and the internal chamber 21 of the vessel 2 (In another embodiment the blocking gate 34 might be displaced by an actuator 346 entirely aside the blocking chamber 32, while another actuator would displace the plug 35 in the opposite direction). In this position food products 5 are inserted into the internal chamber 21 of the vessel 2, as indicated by an arrow. The actuator 346 maintains also the radially external position of the plug 35 which rests upon the radially internal face of the gate 34. Obviously Fig. 4a illustrates also the unloading phase, during which the processed products 5 are being withdrawn from the internal chamber 21.

Fig. 4b illustrates the closing phase. As shown the actuator 346 lowered the blocking gate 34 along with the plug 35 resting upon it to the position where the plug 35 is axially aligned with the plug socket 36 passing through the body 31 and joining the blocking chamber 32 with the internal chamber 21 of the vessel 2. As shown the plug 35 has been axially displaced toward the internal chamber 21, along with a rail 356 and a supporting frame 357 by means of a actuator (not shown) acting in parallel to the axis A. In this position the axially external face 352 of the plug 35 is axially displaced from the internal face 342 of the blocking gate 34 toward the loading outlet 33. In this position water may be filed inside and air removed from inside the internal chamber 21 through a channel 37 in the body 31 with the plug 35 preliminarily sealing the plug socket 36 at the axially internal side of the blocking chamber 32. In other embodiments water filling may be effected solely through the pressure applying channel 353 of the plug or through both channels 37 and 353.

Fig. 4c illustrates the pressure applying phase. As shown the axial actuator has pushed the supporting frame 357, the rail 356 and the plug 35 into the plug socket 36 towards the internal chamber 21 of the vessel 2, so that the plug sealing means 351 adhere to the internal surface of the chamber 21. The actuator 346 in turn displaced the blocking gate 34 back inside the blocking chamber 32. In this position the axially external face 341 of the blocking gate 34 abuts the axially external face 321 of the blocking chamber 32, while the axially internal face 342 of the blocking gate 34 abuts the axially external face 352 of the plug 35. Water under high pressure is applied to the internal chamber 21 through the channel 353 in the plug 35. The axial reaction of the pressure acting on the plug 35 inside the chamber 21 is transferred by the plug 35 to the blocking gate 34 that it acts upon and further by the blocking gate 34 to the body 31. Finally the extending forces are transferred by the body 31 to the already prestressed tie-rods 4 (cf. Fig. 2).

In yet another embodiment of the present invention the high pressure assembly may comprise a number of vessels 2 disposed in parallel with each other and closed at their axial ends with common head assemblies 3.

The above embodiments of the present invention are merely exemplary. The figures are not necessarily to scale, and for clarity some features may be exaggerated or minimized.

List of the reference numerals

1. high pressure assembly (1a, 1b)
2. high pressure vessel
   21. internal chamber
3. head assembly
   31. body
   32. blocking chamber
   321. axially external face
   33. loading outlet
   34. blocking gate
   341. axially external face
   342. axially internal face
   343. loading channel
   346. actuator
   35. plug
   351. sealing means
   352. axially external face
   353. pressure applying channel
   356. rail
   357. supporting frame
   36. plug socket
   37. channel
4. tie-rod
   41. external thread
   42. nut
   421. resisting surface
   43. resisting surface
5. product
6. tie member (6a, 6b)

**Claims**

1. A high pressure isostatic pressing assembly (1a, 1b), in particular food high pressure processing assembly, comprising at least one high pressure, longitudinal vessel (2) having an internal chamber (21) closed at both axial ends with two head assemblies (3), each comprising a body (31) adjoining the vessel (2), wherein

   at least one head assembly (3) further comprises
   a blocking chamber (32) located within the body (31) transversely relative to the longitudinal axis (A) of the vessel (2),
   a loading outlet (33), substantially aligned with the axis (A) of the vessel (2), joining an axially external side of the body (31) with said blocking chamber (32), and having cross-sectional area substantially corresponding to the cross-sectional area of the vessel (2), and
   a plug (35) disposed displaceably within the blocking chamber (32) and provided with a sealing means (351) apt to enter and sealingly close the internal chamber (21) of the vessel (2) during the pressure applying phase of the vessel (2), **characterized in that**
it further comprises at least two longitudinal tie-rods (4) juxtaposed, preferably symmetrically, around the external surface of the vessel (2) at the radially external side of the blocking chamber (32),
wherein each end of each tie rod (4) passes through a tie member (6), coupled with the vessel (2), and is coupled with a resisting surface (421, 43) transferring axial load on said tie member (6) at the axially external side of said end of said tie rod (4),
wherein said resisting surfaces (421, 43) axially preload said tie-rod (4), said body (31) and said vessel (2), and the preload force is adjusted at least to the value ensuring that no separation between said body (31) and said vessel (2) occurs during the loading and closing phase of the vessel (2), as well as during the pressure applying phase of the vessel (2) so that the vessel (2) is axially compressed in all the range of pressures acting inside the vessel (2) by the head assemblies (3) coupled with the tie-rods (4).

2. The high pressure assembly according to claim 1, **characterised in that**, the bodies (31) of the two head assemblies (3) of the high pressure isostatic pressing assembly (1a) are coupled with each other by said at least two longitudinal tie-rods (4).

3. The high pressure assembly according to claim 2, **characterised in that**, the combined preload force ($T_p$) of all said tie-rods (4) is adjusted at least to the value of the axial force ($F_v$) generated in the vessel (2) during the pressure applying phase multiplied by the axial stiffness ($C_v$) of the vessel (2) relative to the axial stiffness ($C_t$) of said tie-rods (4) and the axial stiffness ($C_v$) of the vessel (2) according to the formula

$$T_p \geq F_v \cdot C_v / (C_v + C_t).$$

4. The high pressure assembly according to claim 1 or 2 or 3, **characterised in that**, said tie member (6a) of said longitudinal tie-rod (4) is the body (31) of the head assembly (3).

5. The high pressure assembly according to claim 1 or 2 or 3, **characterised in that**, said tie member (6) of said longitudinal tie-rod (4) adjoins or is coupled with the body (31) of the head assembly (3).

6. The high pressure assembly according to claim 1 or 2 or 3, **characterised in that**, the body (31) of the head assembly (3) has a multipart construction and said tie member (6) is the most axially external part of said body (31) transferring axial loads on the vessel (2).

7. The high pressure assembly according to any of the preceding claims, **characterised in that**, the blocking chamber (32) of said at least one head assembly (3) is provided with an axially external face (321) and the plug (35) is provided with an axially external face (352), wherein said at least one of the head assemblies (3) further comprises a blocking gate (34) having axial width lower than the axial width of the blocking chamber (32), which is disposed slidably within said blocking chamber (32) and is provided with an axially external face (341) abutting said axially external face (321) of the blocking chamber (32) and an axially internal face (342), wherein said axially external face (352) of the plug (35) abuts said axially internal face (342) of said blocking gate (34) during the pressure applying phase and is axially displaced from said axially internal face (342) of said blocking gate (34) toward said loading outlet (33) during the loading phase.

8. The high pressure assembly according to claim 7, **characterised in that**, said blocking gate (34) is provided with a loading channel (343) having cross-sectional area substantially corresponding to the cross-sectional area of the internal chamber (21) of the vessel (2), that passes between said axially external face (341) and said axially internal face (342) of said blocking gate substantially in parallel with the axis (A) of the vessel (2), and during loading phase is substantially aligned with said loading outlet (33).

9. The high pressure assembly according to claim 7 or 8, **characterised in that**, said plug (35) is supported on said blocking gate (34).

10. The high pressure assembly according to any of the preceding claims, **characterised in that**, at least one of the head assemblies (3) further comprises a plug socket (36) joining the blocking chamber (32) with the internal chamber (21) of the vessel (2) and said plug (35) is disposed displaceably also within said plug socket (36).

11. The high pressure assembly according to any of the preceding claims, **characterised in that**, displacements of the plug (35) within the blocking chamber (32) are determined with respect to the body (31) of the head assembly (3).

12. The high pressure assembly according to any of the preceding claims, **characterised in that**, said plug (35) is provided with a pressure applying channel (353).

13. The high pressure assembly according to any of the preceding claims, **characterised in that**, said resisting surfaces (421, 43) are pressed by at least one nut (42).

14. The high pressure assembly according to claim 13, **characterised in that**, said nut (42) is screwed on an external thread (41) of said tie rod (4).

15. The high pressure assembly according to any of the preceding claims, **characterised in that**, said resisting surfaces (421, 43) are pressed by a multi-bolt tensioning system.

16. The high pressure assembly according to any of the preceding claims, **characterised in that**, it comprises a number of vessels (2) disposed in parallel with each other and closed at their axial ends with two common head assemblies (3).

**Patentansprüche**

1. Eine isostatische Hochdruckpressenbaugruppe (1a, 1b), insbesondere Lebensmittel-Hochdruck-Verarbeitungsbaugruppe, mit mindestens einem länglichen HochdruckBehälter (2), der eine an beiden axialen Enden verschlossene Innenkammer (21) mit zwei Kopfbaugruppen (3) aufweist, die jeweils einen an den Behälter (2) angrenzenden Körper (31) umfassen, wobei
mindestens eine Kopfbaugruppe (3) außerdem aus Folgendem besteht:

einer Sperrkammer (32), die innerhalb des Körpers (31) quer zur Längsachse (A) des Behälters (2) angeordnet ist,
einem Ladeauslass (33), der im Wesentlichen mit der Achse (A) des Behälters (2) ausgerichtet ist, eine axial äußere Seite des Körpers (31) mit der Sperrkammer (32) verbindet und eine Querschnittsfläche aufweist, die im Wesentlichen der Querschnittsfläche des Behälters (2) entspricht, und
einem Stopfen (35), der verschiebbar in der Sperrkammer (32) angeordnet und mit einem Dichtungsmittel (351) versehen ist, das in die Innenkammer (21) des Behälters (2) eindringen und diese während der Druckbeaufschlagungsphase des Behälters (2) dicht verschließen kann,
**dadurch gekennzeichnet, dass**
sie außerdem mindestens zwei längliche Zugstangen (4) umfasst, die nebeneinander, vorzugsweise symmetrisch, um die Außenfläche des Behälters (2) an der radial äußeren Seite der Sperrkammer (32) angeordnet sind,
wobei jedes Ende jeder Zugstange (4) durch ein mit dem Behälter (2) verbundenes Verbindungselement (6) hindurchgeht und mit einer Widerstandsfläche (421, 43) verbunden ist, die eine axiale Last auf das Verbindungselement (6) an der axial äußeren Seite des Endes der Zugstange (4) überträgt,

wobei die Widerstandsflächen (421, 43) die Zugstange (4), den Körper (31) und den Behälter (2) axial vorspannen und die Vorspannkraft mindestens auf den Wert eingestellt ist, der sicherstellt, dass keine Trennung zwischen dem Körper (31) und dem Behälter (2) während der Lade- und Schließphase des Behälters (2) auftritt, sowie während der Phase der Druckbeaufschlagung des Behälters (2), so dass der Behälter (2) in dem gesamten Bereich der Drücke, die im Inneren des Behälters (2) durch die mit den Zugstangen (4) gekoppelten Kopfbaugruppen (3) wirken, axial zusammengedrückt wird.

2. Die Hochdruckbaugruppe nach Anspruch 1, **dadurch gekennzeichnet, dass** die Körper (31) der beiden Kopfbaugruppen (3) der isostatischen Hochdruckpressenbaugruppe (1a) durch die mindestens zwei länglichen Zugstangen (4) miteinander verbunden sind.

3. Die Hochdruckbaugruppe nach Anspruch 2, **dadurch gekennzeichnet, dass** die kombinierte Vorspannkraft ($T_p$) aller Zugstangen (4) mindestens auf den Wert der Axialkraft ($F_v$) eingestellt ist, die in dem Behälter (2) während der Druckbeaufschlagungsphase erzeugt wird, multipliziert mit der Axialsteifigkeit ($C_v$) des Behälters (2) im Verhältnis zur Axialsteifigkeit ($C_t$) der Zugstangen (4) und der Axialsteifigkeit ($C_v$) des Behälters (2) gemäß der Formel

$$T_p \geq F_v \cdot C_v / (C_v + C_t).$$

4. Die Hochdruckbaugruppe nach Anspruch 1 oder 2 oder 3, **dadurch gekennzeichnet, dass** das Verbindungselement (6a) der länglichen Zugstange (4) der Körper (31) der Kopfbaugruppe (3) ist.

5. Die Hochdruckbaugruppe nach Anspruch 1 oder 2 oder 3, **dadurch gekennzeichnet, dass** das Verbindungselement (6) der länglichen Zugstange (4) an den Körper (31) der Kopfbaugruppe (3) angrenzt oder mit diesem gekoppelt ist.

6. Die Hochdruckbaugruppe nach Anspruch 1 oder 2 oder 3, **dadurch gekennzeichnet, dass** der Körper (31) der Kopfbaugruppe (3) eine mehrteilige Konstruktion aufweist und das Verbindungselement (6) der axial äußerste Teil des Körpers (31) ist, der axiale Lasten auf den Behälter (2) überträgt.

7. Die Hochdruckbaugruppe nach einem der vorhergehenden Ansprüche, **dadurch gekennzeichnet, dass** die Sperrkammer (32) der mindestens einen Kopfbaugruppe (3) mit einer axial äußeren Fläche (321) und der Stopfen (35) mit einer axial äußeren Fläche (352) versehen ist, wobei die mindestens eine der Kopfbaugruppen (3) ferner einen Sperrschieber (34) aufweist, dessen axiale Breite geringer ist als die axiale Breite der Sperrkammer (32), der gleitend innerhalb der Sperrkammer (32) angeordnet ist und mit einer axial äußeren Fläche (341), die an der axial äußeren Fläche (321) der Sperrkammer (32) anliegt, und einer axial inneren Fläche (342) versehen ist, wobei die axial äußere Fläche (352) des Stopfens (35) während der Druckbeaufschlagungsphase an der axial inneren Fläche (342) des Sperrschiebers (34) anliegt und von der axial inneren Fläche (342) des Sperrschiebers (34) während der Ladephase in Richtung des Ladeauslasses (33) axial verschoben wird.

8. Die Hochdruckbaugruppe nach Anspruch 7, **dadurch gekennzeichnet, dass** der Sperrschieber (34) mit einem Ladekanal (343) versehen ist, dessen Querschnittsfläche im Wesentlichen der Querschnittsfläche der Innenkammer (21) des Behälters (2) entspricht, der zwischen der axial äußeren Fläche (341) und der axial inneren Fläche (342) des Sperrschiebers im Wesentlichen parallel zur Achse (A) des Behälters (2) verläuft und während der Ladephase im Wesentlichen mit dem Ladeauslass (33) ausgerichtet ist.

9. Die Hochdruckbaugruppe nach Anspruch 7 oder 8, **dadurch gekennzeichnet, dass** der Stopfen (35) auf dem Sperrschieber (34) abgestützt ist.

10. Die Hochdruckbaugruppe nach einem der vorhergehenden Ansprüche, **dadurch gekennzeichnet, dass** mindestens eine der Kopfbaugruppen (3) ferner eine Buchse (36) aufweist, die die Sperrkammer (32) mit der Innenkammer (21) des Behälters (2) verbindet, und dass der Stopfen (35) auch innerhalb der Buchse (36) verschiebbar angeordnet ist.

11. Die Hochdruckbaugruppe nach einem der vorhergehenden Ansprüche, **dadurch gekennzeichnet, dass** Verschiebungen des Stopfens (35) innerhalb der Sperrkammer (32) in Bezug auf den Körper (31) der Kopfbaugruppe (3) bestimmt werden.

12. Die Hochdruckbaugruppe nach einem der vorhergehenden Ansprüche, **dadurch gekennzeichnet, dass** der Stopfen (35) mit einem Druckbeaufschlagungskanal (353) versehen ist.

13. Die Hochdruckbaugruppe nach einem der vorhergehenden Ansprüche, **dadurch gekennzeichnet,**

**dass** die Widerstandsflächen (421, 43) durch mindestens eine Mutter (42) gepresst werden.

14. Die Hochdruckbaugruppe nach Anspruch 13, **dadurch gekennzeichnet, dass** die Mutter (42) auf ein Außengewinde (41) der Zugstange (4) geschraubt ist.

15. Die Hochdruckbaugruppe nach einem der vorhergehenden Ansprüche, **dadurch gekennzeichnet, dass** die Widerstandsflächen (421, 43) durch ein Mehrbolzen-Spannsystem gepresst werden.

16. Die Hochdruckbaugruppe nach einem der vorhergehenden Ansprüche, **dadurch gekennzeichnet, dass** sie mehrere parallel zueinander angeordnete Behälter (2) umfasst, die an ihren axialen Enden mit zwei gemeinsamen Kopfbaugruppen (3) verschlossen sind.

## Revendications

1. Un ensemble de pressage isostatique haute pression (1a, 1b), en particulier ensemble de traitement à haute pression d'aliments, comprenant au moins un récipient longitudinal à haute pression (2) ayant une chambre interne (21) fermée aux deux extrémités axiales par deux ensembles de tête (3), chacun comprenant un corps (31) adjacent au récipient (2), dans lequel

> au moins un ensemble de tête (3) comprend en outre une chambre de blocage (32) située à l'intérieur du corps (31) transversalement par rapport à l'axe longitudinal (A) du récipient (2), une sortie de chargement (33), sensiblement alignée avec l'axe (A) du récipient (2), reliant un côté axialement externe du corps (31) à ladite chambre de blocage (32), et ayant une aire de section transversale correspondant sensiblement à l'aire de section transversale du récipient (2), et
> un bouchon (35) disposé de manière déplaçable à l'intérieur de la chambre de blocage (32) et pourvu d'un moyen d'étanchéité (351) apte à entrer et à fermer de manière étanche la chambre interne (21) du récipient (2) pendant la phase d'application de pression du récipient (2), **caractérisé en ce qu'**il comprend en outre au moins deux tirants longitudinaux (4) juxtaposés, de préférence symétriquement, autour de la surface externe du récipient (2) sur le côté radialement externe de la chambre de blocage (32), où chaque extrémité de chaque tirant (4) passe à travers un élément de liaison (6), couplé au récipient (2), et est couplé à une surface de résistance (421, 43) transférant une charge axiale sur ledit élément de liaison (6) sur le côté axialement externe de ladite extrémité dudit tirant (4),

dans lequel lesdites surfaces de résistance (421, 43) préchargent axialement ledit tirant (4), ledit corps (31) et ledit récipient (2), et la force de précharge est ajustée au moins à la valeur garantissant qu'aucune séparation entre ledit corps (31) et ledit récipient (2) ne se produit pendant la phase de chargement et de fermeture du récipient (2), ainsi que pendant la phase d'application de la pression du récipient (2) de sorte que le récipient (2) est comprimé axialement dans toute la gamme de pressions agissant à l'intérieur du récipient (2) par les ensembles de tête (3) couplés aux tirants (4).

2. L'ensemble haute pression selon la revendication 1, **caractérisé en ce que** les corps (31) des deux ensembles de tête (3) de l'ensemble de pressage isostatique haute pression (1a) sont couplés l'un à l'autre par lesdits au moins deux tirants longitudinaux (4).

3. L'ensemble haute pression selon la revendication 2, **caractérisé en ce que**, la force de précharge combinée ($T_p$) de tous lesdits tirants (4) est ajustée au moins à la valeur de la force axiale ($F_v$) générée dans le récipient (2) pendant la phase d'application de la pression multipliée par la rigidité axiale ($C_v$) du récipient (2) par rapport à la rigidité axiale ($C_t$) desdits tirants (4) et à la rigidité axiale ($C_v$) du récipient (2) selon la formule

$$T_p \geq F_v \cdot C_v / (C_v + C_t).$$

4. L'ensemble haute pression selon la revendication 1 ou 2 ou 3, **caractérisé en ce que**, ledit élément de liaison (6a) dudit tirant longitudinal (4) est le corps (31) de l'ensemble de tête (3).

5. L'ensemble haute pression selon la revendication 1 ou 2 ou 3, **caractérisé en ce que** ledit élément de liaison (6) dudit tirant longitudinal (4) est adjacent ou couplé au corps (31) de l'ensemble de tête (3).

6. L'ensemble haute pression selon la revendication 1 ou 2 ou 3, **caractérisé en ce que** le corps (31) de l'ensemble de tête (3) a une construction en plusieurs parties et ledit élément de liaison (6) est la partie la plus axialement externe dudit corps (31) transférant des charges axiales sur le récipient (2).

7. L'ensemble haute pression selon l'une quelconque des revendications précédentes, **caractérisé en ce que** la chambre de blocage (32) dudit au moins un ensemble de tête (3) est munie d'une face axialement externe (321) et le bouchon (35) est muni d'une face axialement externe (352), dans lequel ledit au moins un des ensembles de tête (3) comprend en outre une porte de blocage (34) ayant une largeur axiale inférieure à la largeur axiale de la chambre de blocage (32), qui est disposée de manière coulissante à l'intérieur de ladite chambre de blocage (32) et est munie d'une face axialement externe (341) en butée contre ladite face axialement externe (321) de la chambre de blocage (32) et d'une face axialement interne (342), dans lequel ladite face axialement externe (352) du bouchon (35) bute contre ladite face axialement interne (342) de ladite porte de blocage (34) pendant la phase d'application de la pression et est déplacée axialement depuis ladite face axialement interne (342) de ladite porte de blocage (34) vers ladite sortie de chargement (33) pendant la phase de chargement.

8. L'ensemble haute pression selon la revendication 7, **caractérisé en ce que** ladite porte de blocage (34) est pourvue d'un canal de chargement (343) ayant une aire de section transversale correspondant sensiblement à l'aire de section transversale de la chambre interne (21) du récipient (2), qui passe entre ladite face axialement externe (341) et ladite face axialement interne (342) de ladite porte de blocage sensiblement parallèlement à l'axe (A) du récipient (2), et pendant la phase de chargement est sensiblement aligné avec ladite sortie de chargement (33).

9. L'ensemble haute pression selon la revendication 7 ou 8, **caractérisé en ce que** ledit bouchon (35) est supporté sur ladite porte de blocage (34).

10. L'ensemble haute pression selon l'une quelconque des revendications précédentes, **caractérisé en ce qu'**au moins l'un des ensembles de tête (3) comprend en outre une douille de bouchon (36) reliant la chambre de blocage (32) à la chambre interne (21) du récipient (2) et ledit bouchon (35) est également disposé de manière déplaçable dans ladite douille de bouchon (36).

11. L'ensemble haute pression selon l'une quelconque des revendications précédentes, **caractérisé en ce que** les déplacements du bouchon (35) dans la chambre de blocage (32) sont déterminés par rapport au corps (31) de l'ensemble de tête (3).

12. L'ensemble haute pression selon l'une quelconque des revendications précédentes, **caractérisé en ce que** ledit bouchon (35) est muni d'un canal d'application de pression (353).

13. L'ensemble haute pression selon l'une quelconque des revendications précédentes, **caractérisé en ce que** lesdites surfaces résistantes (421, 43) sont pressées par au moins un écrou (42).

14. L'ensemble haute pression selon la revendication 13, **caractérisé en ce que** ledit écrou (42) est vissé sur un filetage extérieur (41) dudit tirant (4).

15. L'ensemble haute pression selon l'une quelconque des revendications précédentes, **caractérisé en ce que**, lesdites surfaces résistantes (421, 43) sont pressées par un système de tension à boulons multiples.

16. L'ensemble haute pression selon l'une quelconque des revendications précédentes, **caractérisé en ce qu'**il comprend plusieurs récipients (2) disposés parallèlement les uns aux autres et fermés à leurs extrémités axiales par deux ensembles de tête (3) communs.

Fig. 1

Fig. 2

EP 3 863 426 B1

Fig. 3

Fig. 4a

Fig. 4b

Fig. 4c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5585076 A
- EP 1707346 A2
- US 4111327 A
- US 5622678 A
- WO 2015133915 A1